# EUROPÄISCHE PATENTSCHRIFT

(11) **EP 1 264 980 B1**
(45) Veröffentlichungstag und Bekanntmachung des Hinweises auf die Patenterteilung: **08.08.2007**
(21) Anmeldenummer: 02011604.2
(22) Anmeldetag: 28.05.2002
(51) Int. Cl.: F02F 3/28, F16J 9/20

(54) **Kolben für einen Verbrennungsmotor**
Piston for an internal combustion engine
Piston pour un moteur à combustion interne

(30) Priorität: 05.06.2001 DE 10127172
(43) Veröffentlichungstag der Anmeldung: 11.12.2002
(73) Patentinhaber: Federal-Mogul Nürnberg GmbH, 90441 Nürnberg (DE)
(72) Erfinder: Linz, Roland, 90471 Nürnberg (DE)
(74) Vertreter: HOFFMANN EITLE

(56) Entgegenhaltungen:
- DE-A- 2 646 922
- GB-A- 401 085
- GB-A- 981 862
- US-A- 5 323 744
- PATENT ABSTRACTS OF JAPAN vol. 012, no. 292 (M-729), 10. August 1988 (1988-08-10) & JP 63 068755 A (SUZUKI MOTOR CO LTD), 28. März 1988 (1988-03-28)

## Beschreibung

### TECHNISCHES GEBIET

Die Erfindung betrifft einen Kolben für einen Verbrennungsmotor nach dem Oberbegriff des Anspruchs 1.

Die in Verbrennungsmotoren eingesetzten Kolben müssen neben der wesentlichen Aufgabe, das in den Zylinderinnenraum eingebrachte Verbrennungsgemisch zu komprimieren, verschiedene Nebenaufgaben erfüllen. Hierzu gehört es beispielsweise, durch geeignete Maßnahmen sicherzustellen, dass das Öl, das zur Schmierung der Kolbenlauffläche an der Zylinderinnenwand vorgesehen ist, beim Abwärtshub von der Zylinderwand abzustreifen und zu verhindern, dass eine übermäßige Menge Öl in den Verbrennungsraum gerät. Hierdurch wird ein akzeptabler Ölverbrauch sichergestellt.

### STAND DER TECHNIK

Zu diesem Zweck weisen gängige Motorkolben zumindest eine Kompressionsringnut zur Aufnahme eines Kompressionsringes und zumindest eine Ölringnut zur Aufnahme eines Ölabstreifringes auf. Die Kompressionsringnut ist näher an dem den Verbrennungsraum begrenzenden Kolbenboden angeordnet. Im übrigen wird nachfolgend auf den Kolbenboden gemäß der üblichen Verwendungsstellung eines Motorkolbens mit "oben" Bezug genommen, während für die Ölringnut davon die Rede sein wird, dass diese "unterhalb" der Kompressionsringnut vorgesehen ist.

Aus der US 1 504 448 ist ein Kolben gemäß dem Oberbegriff des Anspruchs 1 bekannt. Bei diesem Kolben ist in dem Ringsteg, der zwischen der untersten Kompressionsringnut und der obersten Ölringnut vorhanden ist, eine Aussparung ausgebildet. Der Ringsteg ist hinsichtlich seiner ringförmigen Mantelfläche insgesamt gegenüber der Manteloder Schaftfläche des übrigen Kolbens zurückgesetzt. Hierdurch ist auch die Ober- und Unterkante der in dem Ringsteg ausgebildeten Aussparung zurückgesetzt. Die Aussparung bildet einen Aufnahmeraum für das beim Abwärtshub abgestreifte Öl, so dass dies beim Abwärtshub wirksam in Richtung Kolbenunterseite geleitet werden kann und durch geeignete Bohrungen abgeführt werden kann, so dass verhindert wird, dass es in den Verbrennungsraum gerät, was den Ölverbrauch erhöhen würde.

Aus der DE 38 32 953 A1 ist ein Kolben für einen Verbrennungsmotor bekannt, bei dem die Aussparung zwischen Kompressionsringnut und Ölringnut an dem Ringsteg, der gegenüber der übrigen Kolbenmantelfläche nicht zurückgesetzt ist, derart ausgebildet ist, dass die Aussparung an ihrer Unterkante gegenüber dem Ringsteg zurückgesetzt ist, so dass auch die obere Nutflanke der daran unmittelbar angrenzenden Ölringnut zurückgesetzt ist.

Um das Problem zu lösen, dass jeweils eine ungenügende Festlegung des in der Ölringnut aufgenommenen Ölabstreifringes gegeben ist, wird gemäß der DE 43 09 776 C2 vorgeschlagen, dass sich die Aussparung in ihrem unteren Bereich bis zur Mantelfläche des Ringsteges derart erstreckt, dass auch hier eine "Tiefe null" gegeben ist. Mit anderen Worten ist die Aussparung von der Mantelfläche ausgehend von einer Tiefe null an ihrer Unterkante bis zu einer Stufe an ihrer Oberkante ausgebildet.

Schließlich beschreibt die US 5 251 915 eine mehrteilige Ausführung eines Ölabstreifringes, der in einer Ölringnut hinsichtlich seiner Position in Tiefenrichtung der Nut durch geeignete Federn und Anschlagmittel festgelegt ist.

### DARSTELLUNG DER ERFINDUNG

Der Erfindung liegt die Aufgabe zugrunde, einen Kolben für einen Verbrennungsmotor zu schaffen, der hinsichtlich der Ölabstreif- und Abführeigenschaften verbessert ist, so dass der Ölverbrauch reduziert wird.

Die Lösung dieser Aufgabe erfolgt durch den im Anspruch 1 beschriebenen Kolben.

Demzufolge weist der erfindungsgemäße Kolben zumindest eine Kompressionsringnut zur Aufnahme eines Kompressionsringes und zumindest eine Ölringnut zur Aufnahme eines Ölabstreifringes auf. In dem Ringsteg, der zwischen der untersten Kompressionsringnut und der obersten Ölringnut vorhanden ist, ist zumindest eine Aussparung ausgebildet. Vorzugsweise ist diese Aussparung gewissermaßen umgekehrt "nasenförmig" gestaltet, indem die Aussparung an ihrer Oberseite durch eine weitergehend gerade ausgebildete Flanke zurückspringt und sich in ihrer Tiefe allmählich zur Unterseite hin verringert, so dass eine Schräge, welche die Aussparung definiert, unter einem spitzen Winkel (im Querschnitt gesehen) zu der Kolbenmantelfläche verläuft. Hierdurch wird zunächst ein vorteilhafter Aufnahmeraum für das abgestreifte Öl geschaffen, so dass dies zuverlässig nach unten hin abgeführt werden kann. Hierbei ist zu beachten, dass auch der oder die Kompressionsringe beim Abwärtshub Öl abstreifen, dessen Abführung zur Kolbenunterseite hin gewährleistet werden muss.

Der Aufnahme dieses Öles dient die in dem Ringsteg ausgebildete Aussparung.

Für das ungehinderte Abfließen des Öles zur Kolbenunterseite ist der Ringsteg insgesamt gegenüber der übrigen Kolbenmantelfläche ein wenig zurückgesetzt. Hierdurch wird in vorteilhafter Weise der stets vorhandene, jedoch vergleichsweise geringe Zwischenraum zwischen der Kolbenmantelfläche und der Zylinderinnenwand vergrößert, um das Öl mit möglichst geringem Widerstand ableiten zu können. Nachfolgend wird insbesondere auf die Ober- und die Unterkante der in dem Ringsteg ausgebildeten Aussparung Bezug genommen. Hierunter wird die kreisförmige Kante verstanden, an der die Aussparung an ihrem oberen bzw. unteren Ende von dem Ringsteg ausgehend ausgebildet ist. Bevorzugt wird oberund unterhalb der Aussparung ein ringförmiger Mantelflächenabschnitt des Ringsteges verbleiben. Dementsprechend bildet der untere Rand des oberhalb der Aussparung vorgesehenen Mantelflächenabschnitts die Oberkante der Aussparung. Ferner bildet der obere Rand der unterhalb der Aussparung vorgesehenen Mantelfläche die Unterkante der Aussparung.

Erfindungsgemäß ist die Unterkante der Aussparung gegenüber deren Oberkante weiter zurückgesetzt. Mit anderen Worten bedeutet dies, dass die untere Flanke der untersten Kompressionsringnut radial größer ist, als die obere Flanke der obersten Ölringnut. Diese Maßnahme hat sich als vorteilhaft dafür erwiesen, ein möglichst ungehindertes Abströmen des Öles zu gewährleisten. Insbesondere ist zu berücksichtigen, dass an der Unterkante der Aussparung vorbei sowohl das Öl, das von dem Kompressionsring abgestreift wurde, als auch das Öl, das sich in der Aussparung gesammelt hat, abströmen muss, so dass es sich hierbei um eine größere Menge Öl handelt, als diejenige Menge, die von dem Bereich des untersten Kompressionsrings in die Aussparung treten muss. Die Erfindung berücksichtigt in vorteilhafter Weise diesen Umstand und gewährleistet zuverlässig, dass das Öl abgeführt werden kann, so dass es nicht in den Verbrennungsraum gelangt, und der Ölverbrauch reduziert wird.

Diesem Zweck dient auch eine weitere erfindungsgemäße Maßnahme, die jedoch grundsätzlich von der vorangehend beschriebenen zusätzlichen Zurückversetzung der Unterkante der Aussparung unabhängig zu sehen ist. Mit anderen Worten kann die nachfolgend beschriebene Maßnahme betreffend die Festlegung eines Ölabstreifringes in einer Ringnut auch bei einem beliebigen Kolben, mit und ohne Aussparung zwischen der untersten Kompressionsringnut und der obersten Ölringnut, sowie unabhängig von der Zurückversetzung des Ringsteges und der darin vorgesehenen Aussparung seine Vorteile im Hinblick auf die Ölabführung entfalten.

Erfindungsgemäß ist nämlich die Ölringnut verglichen mit einer gewöhnlichen Ölringnut deutlich tiefer ausgebildet, so dass hier zusätzliches Volumen und ein zusätzlicher Drainageraum entsteht. Hierdurch kann durch einen Hub des Kolbens deutlich mehr Öl, das von der Zylinderinnenwand abgestreift wurde, zur Kolbenunterseite hin abgeführt werden. Um trotz der vertieft ausgebildeten Ölringnut der Gefahr vorzubeugen, dass bei der Montage des Ölringes die Gefahr eines Bruchs besteht, da der Ring tiefer und insbesondere über den Unfang ungleichmäßig tief in die Ölringnut eindringen kann, ist an dem erfindungsgemäßen Kolben in der Ölringnut ein Anlageabschnitt vorgesehen.

An dem Anlageabschnitt liegt der Ölring in einer definierten Position und Tiefe an, so dass ein übermäßig tiefes Eindringen in die Ölringnut und damit ein Bruch des Ringes insbesondere bei dessen Montage vermieden werden kann. Erfindungsgemäß ist der Anlageabschnitt unmittelbar an dem Kolben vorgesehen und dient der direkten Zusammenwirkung mit einer Kante oder einem Abschnitt des Ölringes selbst, um dessen Lage festzulegen. Mit anderen Worten ist die erfindungsgemäße Maßnahme nicht mit denjenigen Anordnungen vergleichbar, die im Stand der Technik bekannt sind, und beispielsweise durch getrennt vorgesehene Federn oder Anschlagelemente die Position eines Ölringes in der Ölringnut definieren.

Hierdurch entsteht ein zusätzlicher Öldrainageraum, der nicht durch übrige, vorhandene Bauteile eingenommen wird, sondern völlig für die Aufnahme und Abführung des Öles freibleibt. Hierdurch kann die Menge des pro Hub abführbaren Öles erheblich vergrößert werden. Bei Versuchen hat sich insbesondere ergeben, dass gegenüber herkömmlichen Ölringnuten eine deutliche Erhöhung der Ölmenge pro Hub möglich ist. Es sei angemerkt, dass ausgehend von dem Grund der Ölringnut eine Bohrung vorgesehen sein kann, die in Richtung des Kolbeninnenraumes ausgeführt ist, so dass das Öl in dieser Richtung abfließen kann.

Bevorzugte Weiterbildungen des erfindungsgemäßen Kolbens sind in den weiteren Ansprüchen beschrieben.

Für die Zurückversetzung der Oberkante der in dem Ringsteg vorgesehenen Aussparung hat es sich als vorteilhaft erwiesen, diese um zumindest 0,4% des Zylinderdurchmessers gegenüber der oberhalb der Kompressionsringnut vorgesehenen Mantelfläche zurückzuversetzen.

Mittels Versuchen wurde darüber hinaus ein günstiges Ausmaß für die Zurückversetzung der Unterkante der Aussparung bezüglich der Oberkante ermittelt. Diese zusätzliche Zurückversetzung kann dadurch beschrieben werden, dass eine Linie, die, im Querschnitt gesehen, durch die Ober- und die Unterkante der Aussparung verläuft, bezüglich der Innenwand einen Winkel von mindestens 4° bildet.

Die Wirkung, dass die in dem Ringsteg ausgebildete, mindestens eine Aussparung eine Ölfalle für aufsteigendes Öl bildet, wird dadurch weiter verbessert, dass hier mehrere, beispielsweise zwei "umgekehrt nasenförmige" Aussparungen vorgesehen sind. Da auch hier zu beachten ist, dass sich die Menge des nach unten hin abzuleitenden Öles nach unten hin erhöht, wird für die Unterkanten der jeweiligen Aussparungen bevorzugt, dass diese von oben nach unten zunehmend zurückgesetzt sind. Hierbei können die Unterkanten zusammen mit der Oberkante der obersten Aussparung auf eine Linie liegen, die bezüglich der Zylinderinnenwand in dem vorangehend angegebenen Winkelbereich geneigt ist.

Grundsätzlich ist die Gestaltung des Ringsteges in dem Bereich ober- und unterhalb der Aussparung beliebig. Es wird jedoch bevorzugt, dass ober- und unterhalb der Aussparung eine ringförmige Mantelfläche ausgebildet ist. Die Mantelfläche ist nicht notwendigerweise bezüglich der Zylinderinnenwand geneigt. Insofern befindet sich die Oberkante der Aussparung und der obere Rand der Mantelfläche auf dem gleichen radialen Niveau. Für die vorangehend beschriebene Winkelposition der durch Ober- und Unterkante der Aussparung verlaufenden Linie sei erwähnt, dass in dem Fall, das oberhalb der Aussparung eine ringförmige Mantelfläche vorhanden ist, der obere Rand dieser Mantelfläche als Bezugspunkt herangezogen wird. Ferner wird für diese Linie als Bezugspunkt, in dem Fall, dass unterhalb der Aussparung eine ringförmige Mantelfläche vorhanden ist, der untere Rand der Mantelfläche herangezogen, der sich auf dem gleichen radialen Niveau befindet, wie die Oberkante der Ölringnut. Ferner sei erwähnt, dass die an die Aussparung unterhalb derselben angrenzende ringförmige Mantelfläche insgesamt um einen Winkel von ebenfalls mindestens 4° gegenüber der Zylinderinnenwand geneigt sein kann.

Im Hinblick auf den zur Lagepositionierung des Ölringes vorgesehenen Anlageabschnitts wird bevorzugt, dass dieser als Stufe oder Kante in dem Nutengrund der Ölringnut ausgebildet ist. Mit anderen Worten wird der Nutengrund über einen Teil seiner Erstreckung vertieft, so dass der erfindungsgemäß vorgesehene zusätzliche Öldrainageraum entsteht, welcher der Vergrößerung des Öldrainagevolumens dient. Mit anderen Worten bildet derjenige Beriech des Nutengrundes, der angesichts der von dem Nutengrund ausgehenden Vertiefung noch verbleibt, den Anlageabschnitt, an dem der Ölring zur Festlegung seiner Lage anliegt. Gewissermaßen wird hierdurch eine Montagekante gebildet.

Alternativ kann die erfindungsgemäße Vergrößerung des Öldrainagevolumens in Verbindung mit der gleichzeitig gewährleisteten Positionierung des Ölringes auch dadurch erreicht werden, dass der Nutengrund der Ölringnut bezüglich der Kolbenachse geneigt oder schräg ausgebildet ist. An einem bestimmten Punkt entlang der Schräge liegt der Ölring beispielsweise mit seiner oberen Innenkante an dem schrägen Nutengrund an, so dass er sich in einer definierten Position befindet. Durch den Raum, der zwischen der Innenfläche des Ringes und dem schräg ausgebildeten Nutengrund entsteht, wird zusätzliches Drainagevolumen geschaffen.

### KURZE BESCHREIBUNG DER ZEICHNUNGEN

Nachfolgend wird die Erfindung anhand von beispielhaft in den Zeichnungen dargestellten Ausführungsformen näher erläutert.

Es zeigen:
- Fig. 1: eine Teil-Querschnittsansicht des erfindungsgemäßen Kolbens in einer ersten Ausführungsform;
- Fig. 2: eine Teil-Querschnittsansicht des erfindungsgemäßen Kolbens in einer zweiten Ausführungsform; und
- Fig. 3: eine Teil-Querschnittsansicht des erfindungsgemäßen Kolbens in einer dritten Ausführungsform.

### BEVORZUGTE AUSFÜHRUNGSFORMEN DER ERFINDUNG

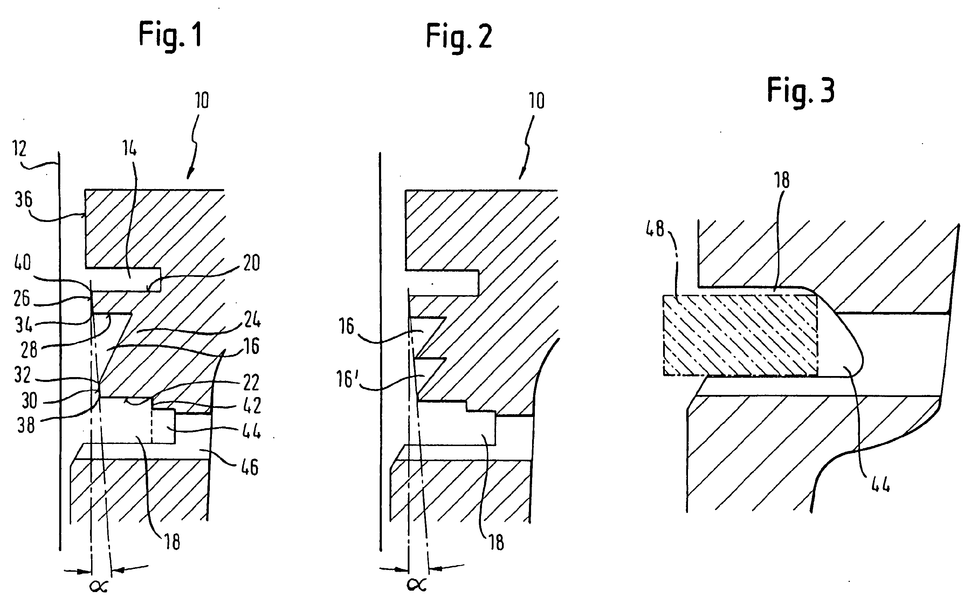

In Fig. 1 ist ein Querschnitt des Randbereiches und des Ringstegbereiches des erfindungsgemäßen Kolbens 10 zusammen mit einer schematisch angedeuteten Zylinderinnenwand 12 zu erkennen. Ausgehend von dem Kolbenboden, der sich gemäß der Verwendungsstellung und der Darstellung von Fig. 1 an der Oberseite des Kolbens 10 befindet, sind bei der gezeigten Ausführungsform eine Kompressionsringnut 14, eine Aussparung 16 und eine Ölringnut 18 vorgesehen. Die in den Ringnuten üblicherweise vorgesehenen Ringe sind der Einfachheit halber nicht gezeigt. Der Bereich zwischen der unteren Flanke 20 der Kompressionsringnut und der oberen Flanke 22 der Ölringnut wird als Ringsteg 24 bezeichnet. Die Aussparung 16 ist in dem Ringsteg 24 als Ölfalle zur Aufnahme von aufsteigendem Öl vorgesehen und bei der gezeigten Ausführungsform wie folgt gestaltet.

Ausgehend von der oberen Mantelfläche 26 des Ringstegs 24 springt die Aussparung 16 mit einer weitgehend geraden Flanke 28 zurück. Ausgehend von der mit der Flanke 28 erreichten Tiefe verringert sich die Tiefe der Aussparung nach unten hin allmählich. Durch den Übergang zwischen der die Aussparung definierenden Schräge und der Mantelfläche 30, die an dem Ringsteg 24 unterhalb der Aussparung 16 vorgesehen ist, wird die kreisförmige Unterkante 32 der Aussparung 16 erreicht. Die Oberkante 34 der Aussparung 16 wird durch die kreisförmige Kante gebildet, an welcher die obere Flanke 28 ausgebildet ist, und die gleichzeitig den unteren Rand der oberen Ringsteg-Mantelfläche 26 bildet.

Erfindungsgemäß ist sowohl die Ober- 34 als auch die Unterkante 32 der Aussparung 16 gegenüber der Mantelfläche 36 im Bereich des Kolbenbodens zurückgesetzt. Hierdurch wird für das jeweils abgestreifte bzw. gesammelte Öl ein besonders widerstandsfreies Fliessen nach unten hin erreicht. Da die Aussparung 16 als zusätzliche Ölfalle wirkt, und sich in diesem Bereich Öl sammelt, ist erfindungsgemäß zusätzlich die Unterkante 32 der Aussparung 16 bezüglich der Oberkante 34 zurückgesetzt, um zu berücksichtigen, dass an dieser Kante vorbei eine größere Menge Öl in die Ringnut 18 strömen muss, als entlang der Oberkante 34. Hierdurch wird erfindungsgemäß eine besonders günstige Ölabführung nach unten hin gewährleistet und der Ölverbrauch gesenkt.

Als vorteilhaft für die Zurücksetzung der Oberkante 34 von der Kolbenmantelfläche 36 hat sich eine Größenordnung von mehr als 4% des Zylinderdurchmessers als vorteilhaft erwiesen. Für die Zurückversetzung der Unterkante 32 der Ausnehmung 16 bezüglich der Oberkante 34 wird bei der gezeigten Ausführungsform die Oberkante 38 der Ölringnut 18 herangezogen. Eine gedachte Linie, die bei der gezeigten Ausführungsform durch die Unterkante 40 der Kompressionsringnut 14 und die Oberkante der Ölringnut 18 verläuft, bildet mit der Zylinderinnenwand einen Winkel α von bevorzugt mehr als 4°. Es sei erwähnt, dass die unterhalb der Aussparung 16 vorgesehene Mantelfläche 30 ebenfalls um den Winkel α geneigt sein kann.

Um die Ölabführung nach unten hin weiter zu verbessern, ist der Nutengrund der Ölringnut 18 in besonderer Weise gestaltet. Ausgehend von dem "gewöhnlichen Nutengrund" 42, von dem erfindungsgemäß lediglich noch eine Montagekante oder Stufe verbleibt, ist eine Vertiefung 44 ausgebildet, die zusätzliches Öldrainagevolumen schafft. Hierdurch kann der das Öl aufnehmende Raum erheblich vergrößert werden, und das pro Abwärtshub abführbare Öl kann hinsichtlich seiner Menge vermehrt werden. In diesem Bereich kann sämtliches Öl, das von den vorhandenen Ringen abgestreift und in der Aussparung 16 gefangen wurde, abgeleitet werden. Die Ableitung erfolgt ferner unterhalb des nicht dargestellten Ölabstreifringes in Richtung der Zylinderinnenwand oder durch eine angrenzend an die Ölringnut 18 vorgesehene Bohrung 46, die zu dem Kolbeninneren führt und sich zu diesem hin öffnet.

Die in Fig. 2 gezeigte Ausführungsform des erfindungsgemäßen Kolbens 10 unterscheidet sich von der in Fig. 1 gezeigten im wesentlichen durch die Anwesenheit von zwei Ausnehmungen 16, 16' anstelle der einen gemäß Fig. 1 vorhandenen Ausnehmung. Hierdurch wird die Wirkung der Ausnehmungen 16, 16' als Ölfallen verstärkt. Mit anderen Worten kann beim Abwärtshub eine größere Menge Öl erfasst werden. Da die Erfindung eine vorteilhafte Gestaltung für die sich von oben nach unten vergrößernde Ölmenge schafft, wird dies auch bei der Gestaltung der zwei vorhandenen Ausnehmungen 16, 16' gemäß der Ausführungsform von Fig. 2 berücksichtigt. Insbesondere ist die Unterkante der unteren Aussparung 16' weiter von der Zylinderinnenwand zurückversetzt, als die Unterkante der oberen Aussparung 16. Hierdurch kann die Ölmenge, die von dem Kompressionsring abgestreift und von der oberen Aussparung 16 gefangen wurde, zusätzlich zu der von der unteren Aussparung 16' erfassten Ölmenge sicher in die Ölringnut 18 geleitet werden, ohne dass die Gefahr besteht, dass Öl ungewollt nach oben, in den Verbrennungsraum gelangt, was den Ölverbrauch erhöhen würde. Im übrigen können sich bei der Ausführungsform von Fig. 2 bevorzugt die genannten Punkte, auf die gemäß Fig. 1 Bezug genommen wurde, zusammen mit der Kante, die zwischen den beiden Aussparungen 16, 16' vorgesehen ist, auf einer Linie befinden, die gemäß der bevorzugten Ausführungsform mit einem Winkel α von mehr als 4° bezüglich der Zylinderinnenwand geneigt ist.

In Fig. 3 ist eine alternative Gestaltung der Ölringnut 18 mit vergrößertem Öldrainagevolumen 44 durch das Vorsehen einer Vertiefung, bei gleichzeitiger Lagefestlegung des angedeuteten Ölringes 48 gezeigt. Anstelle der bei den Ausführungsformen von Fig. 1 und 2 vorgesehenen Kante oder Stufe 42 ist bei der Ausführungsform von Fig. 3 der Nutengrund derart geneigt gestaltet, dass die obere Innenkante des Ölringes 48 in einem oberen Bereich des Nutengrundes an diesem anliegt, und im unteren Bereich des Nutengrundes zusammen mit der Innenfläche des Ölringes das zusätzliche Öldrainagevolumen definiert wird. Es versteht sich, dass der Verlauf des Nutengrundes gestuft und/oder geneigt oder in sonstiger Form vertieft gestaltet sein kann, um das zusätzliche Öldrainagevolumen vorzusehen und gleichzeitig einen Anlageabschnitt zu bilden, an dem der Ölring in Tiefenrichtung anliegt, so dass er in definierter Weise positioniert ist. Insbesondere entsteht hierdurch bei der Montage des Ölringes 48 keine Bruchgefahr, die auftreten würde, wenn der Ring bei einer vertieft ausgebildeten Ölringnut 18 beliebig und insbesondere entlang seines Umfangs unterschiedlich weit in die Ölringnut 18 eintreten könnte.

## Patentansprüche

1. Kolben (10) für einen Verbrennungsmotor mit zumindest einer Kompressionsringnut (14) zur Aufnahme eines Kompressionsringes und zumindest einer Ölringnut (18) zur Aufnahme eines Ölabstreifringes (48) sowie zumindest einer Aussparung (16), die in dem Ringsteg (24) zwischen der untersten Kompressionsringnut (14) und der obersten Ölringnut (18) ausgebildet ist, wobei sowohl die kreisförmige Oberkante (34) als auch die kreisförmige Unterkante (32) der Aussparung (16) gegenüber der Kolben-Mantelfläche (36) zurückgesetzt ist,
**dadurch gekennzeichnet, dass**
die Unterkante (32) der Aussparung (16) weiter zurückgesetzt ist als die Oberkante (34),
und die Ölringnut (18) einen unmittelbar an dem Kolben vorgesehenen Anlageabschnitt (42) zur Zusammenwirkung mit dem Ölring (48) und zu dessen Lagepositionierung aufweist.

2. Kolben (10) für einen Verbrennungsmotor nach Anspruch 1,
**dadurch gekennzeichnet, dass**
die Oberkante (34) der Aussparung (16) um zumindest 0,4% des Zylinderdurchmessers zurückgesetzt ist.

3. Kolben (10) für einen Verbrennungsmotor nach Anspruch 1 oder 2,
**dadurch gekennzeichnet, dass**
die Unterkante (32) der Aussparung bezüglich der Oberkante (34) derselben derart weiter zurückgesetzt ist, dass eine Linie, die im Querschnitt gesehen durch die Ober- (34) und die Unterkante (32) verläuft, zur Zylinderwand (12) einen Winkel (α) von mindestens 4° bildet.

4. Kolben (10) für einen Verbrennungsmotor nach einem der vorangehenden Ansprüche,
**dadurch gekennzeichnet, dass**
die Unterkanten (32) mehrerer in dem Ringsteg (24) ausgebildeten Aussparungen (16; 16') nach unten hin zunehmend zurückversetzt sind.

5. Kolben (10) für einen Verbrennungsmotor nach einem der vorangehenden Ansprüche,
**dadurch gekennzeichnet, dass**
an die Aussparung (16) angrenzend ober- und unterhalb derselben ringförmige Mantelflächen (26, 30) ausgebildet sind, welche die Ober- (34) bzw. die Unterkante (32) aufweisen und insgesamt zurückgesetzt sind.

6. Kolben (10) für einen Verbrennungsmotor nach einem der vorangehenden Ansprüche,
**dadurch gekennzeichnet, dass**
der Nutengrund der Ölringnut (18) eine Stufe oder Kante aufweist, die als Anlageabschnitt (42) dient.

7. Kolben (10) für einen Verbrennungsmotor nach einem der vorangehenden Ansprüche,
**dadurch gekennzeichnet, dass**
der Nutengrund der Ölringnut (18) im Querschnitt gesehen geneigt und oder gerundet ausgebildet ist, wobei eine definierte Stelle des Nutengrundes als Anlageabschnitt dient.

## Claims

1. Piston (10) for an internal combustion engine having at least one compression ring groove (14) for receiving a compression ring and at least one oiling ring groove (18) for receiving an oil-wiping ring (48) and at least one recess (16), which is formed in the ring bar (24) between the lowest compression ring groove (14) and the uppermost oiling ring groove (18), wherein both the circular upper edge (34) and the circular lower edge (32) of the recess (16) is set back with respect to the piston shell surface (36), **characterised in that** the lower edge (32) of the recess (16) is set back further than the upper edge (34), and the oiling ring groove (18) has a support section (42) provided directly on the piston to cooperate with the oiling ring (48) and for its location positioning.

2. Piston (10) for an internal combustion engine according to claim 1, **characterised in that** the upper edge (34) of the recess (16) is set back by at least 0.4% of the cylinder diameter.

3. Piston (10) for an internal combustion engine according to claim 1 or 2, **characterised in that** the lower edge (32) of the recess is set back further with respect to the upper edge (34) of the same such that a line which, seen in cross-section, runs through the upper (34) and the lower edge (32), forms an angle (α) of at least 4° to the cylinder wall (12).

4. Piston (10) for an internal combustion engine according to one of the preceding claims, **characterised in that** the lower edges (32) of several recesses (16; 16') formed in the ring bar (24) are set back increasingly downwards.

5. Piston (10) for an internal combustion engine according to one of the preceding claims, **characterised in that** annular shell surfaces (26, 30) bordering the recess (16) above and below the same are formed which have the upper (34) or the lower edge (32) and as a whole are set back.

6. Piston (10) for an internal combustion engine according to one of the preceding claims, **characterised in that** the groove base of the oiling ring groove (18) has a step or edge which serves as a support section (42).

7. Piston (10) for an internal combustion engine according to one of the preceding claims, **characterised in that** the groove base of the oiling ring groove (18), seen in cross-section, is at an angle and or designed to be rounded, wherein a defined point of the groove base serves as a support section.

## Revendications

1. Piston (10) pour un moteur à combustion interne avec au moins une rainure annulaire de compression (14) destinée à recevoir un anneau de compression et au moins une rainure annulaire de graissage (18) destinée à recevoir un segment racleur d'huile (48) ainsi qu'avec au moins un évidement (16), lequel est réalisé dans le listel de piston (24) entre la rainure annulaire de compression la plus basse (14) et la rainure annulaire de graissage la plus haute (18), aussi bien l'arête supérieure (34) circulaire que l'arête inférieure (32) circulaire de l'évidement (16) étant en retrait par rapport à la surface enveloppe du piston (36),
**caractérisé en ce que**
l'arête inférieure (32) de l'évidement (16) est davantage en retrait que l'arête supérieure (34),
et la rainure annulaire de graissage (18) présente une section de butée (42) prévue directement au niveau du piston pour interagir avec la bague de graissage (48) et pour son positionnement.

2. Piston (10) pour un moteur à combustion interne selon la revendication 1,
**caractérisé en ce que**
l'arête supérieure (34) de l'évidement (16) est en retrait d'au moins 0,4 % du diamètre du cylindre.

3. Piston (10) pour un moteur à combustion interne selon la revendication 1 ou 2,
**caractérisé en ce que**
l'arête inférieure (32) de l'évidement est en retrait par rapport à l'arête supérieure (34) de l'évidement, de telle sorte qu'une ligne qui, vue en coupe transversale, passe par l'arête supérieure (34) et l'arête inférieure (32), forme par rapport à la paroi du cylindre (12) un angle (α) d'au moins 4°.

4. Piston (10) pour un moteur à combustion interne selon l'une quelconque des revendications précédentes,
**caractérisé en ce que**
les arêtes inférieures (32) de plusieurs évidements (16 ; 16') réalisés dans le listel de piston (24) sont en retrait de façon croissante vers le bas.

5. Piston (10) pour un moteur à combustion selon l'une quelconque des revendications précédentes,
**caractérisé en ce que**
des surfaces enveloppes (26, 30) annulaires sont réalisées de manière adjacente au-dessus et au-dessous de l'évidement (16), lesquelles présentent respectivement l'arête supérieure (34) et l'arête inférieure (32) et sont dans l'ensemble en retrait.

6. Piston (10) pour un moteur à combustion interne selon l'une quelconque des revendications précédentes,
**caractérisé en ce que**
le fond de la rainure annulaire de graissage (18) présente un gradin ou une arête qui sert de section de butée (42).

7. Piston (10) pour un moteur à combustion interne selon l'une quelconque des revendications précédentes,
**caractérisé en ce que**
le fond de la rainure annulaire de graissage (18) est réalisé, vu en section transversale, de façon inclinée et/ou arrondie, une position définie du fond de la rainure servant de section de butée.
